# EUROPEAN PATENT SPECIFICATION

(11) **EP 1 767 879 B1**
(45) Date of publication and mention of the grant of the patent: **20.09.2017**
(21) Application number: 05730618.5
(22) Date of filing: 18.04.2005
(51) Int. Cl.: F24D 17/00, F24D 19/10, F24D 11/02, F24D 17/02

(54) **HEAT PUMP-TYPE HOT WATER SUPPLY APPARATUS**
HEISSWASSERZUFUHRVORRICHTUNG NACH WÄRMEPUMPENART
APPAREIL D"ALIMENTATION EN EAU CHAUDE DE TYPE POMPE A CHALEUR

(30) Priority: 28.04.2004 JP 2004133783
(43) Date of publication of application: 28.03.2007
(73) Proprietor: Toshiba Carrier Corporation, Tokyo 105-8001 (JP)
(72) Inventor: SHIMMA, Yasuhiro Toshiba Carrier Corporation, Shizuoka-ken 416-8521 (JP); OOKOSHI, Seiji Toshiba Carrier Corporation, Shizuoka-ken 416-8521 (JP); TANABE, Tomoaki Toshiba Carrier Corporation, Shizuoka-ken 416-8521 (JP)
(74) Representative: Moreland, David
(86) International application number: PCT/JP2005/007397
(87) International publication number: WO 2005/106346

(56) References cited:
- CN-Y- 2 554 546
- JP-A- 2001 082 818
- JP-A- 2003 240 340
- JP-U- 56 014 946
- US-A- 4 633 676
- US-A- 4 645 908

## Description

### Technical Field

The present invention relates to a heat pump type hot water supplying system, which has a heat pump refrigerating cycle, and supplies hot water for living and heating.

### Background Art

There is the tendency of using a separate-type heat pump system, which is provided with a water heat exchanger instead of an air heat exchanger, and configured separately from an outdoor unit. Particularly, Patent Document 1 describes a heat pump system and a method of installing the heat pump system.

The heat pump system has a relatively simple configuration, and permits selection of the functions and number of functions of a user-side unit, such as, supplying hot water, reheating bath water and air conditioning, and permits use of an existing unit.

Concretely, the heat pump system comprises an outdoor unit having a compressor, an outdoor heat exchanger, and an electronic expansion valve; a hot water unit having a hot water tank connected to the outdoor unit through refrigerant piping, and a water heat exchanger for supplying hot water; a reheating unit having a reheating heat exchanger connected to the outdoor unit by refrigerant piping through the hot water unit; and a heating/air conditioning unit connected to the outdoor unit by refrigerant piping through the hot water unit.
Patent Document 1: Jpn. Pat. Appln. KOKAI Publication No. 2001-082818

### Disclosure of Invention

In the art of the Patent Document 1, except the heating/air conditioning unit having a water heat exchanger for heating installed inside a room, the hot water unit containing the water heat exchanger for supplying hot water and the hot water tank, and the reheating unit having a heat exchanger for reheating are installed outside a room together with the outdoor unit having a compressor and an outdoor heat exchanger.

The water heat exchangers provided in the hot water unit and reheating unit are connected to a tank and bathtub through water piping. Therefore, at least a part of the water piping is exposed to the outside of a room, and directly affected by an outside air temperature.

The outdoor water piping is wound with a heat insulation material, and the piping surface is not exposed. But, when the system is installed in a cold district or operated in a cold season at an extremely low temperature, the insulation effect of the heat insulation material is decreased and the water in the water piping may be frozen. When the system is used for a long period, the heat insulation material may deteriorate. Thus, all parts of the water piping are desirably placed in a room.

The system of the Patent Document 1 has a water heat exchanger in each of the user-side hot water unit and reheating unit. However, the water heat exchanger is at the same time a user-side heat exchanger in the refrigerating cycle circuit, and becomes an extremely large unit extending over the user-side part and refrigerating cycle circuit. Thus, the installing condition is bad.

Further, in the above configuration, it is impossible to supply hot water to meet the amount of load in each user-side unit. This affects the efficiency of operation. Therefore, the water heat exchangers in the user-side units are desirably independent of one another.

The present invention has been made to solve the above problems. It is an object of the present invention to provide a heat pump type hot water supplying system, which can prevent freezing of water in piping, and realize compactness in the user-side units and increased efficiency of operation.

US 4633676 discloses a heat pump type hot water supplying system comprising a heat source unit which has a compressor, a pressure reducing mechanism and a heat exchanger in a heat source forming a part of a heat pump refrigerating cycle, and contains a controller to control operation of an outdoor fan and electric apparatus; and a water heat exchange unit which is placed separably from the heat source unit, and contains a water heat exchanger forming the remaining part of the heat pump refrigerating cycle, a pump to lead circulation water to the water heat exchanger through water piping, and a controller to control operation of the pump, and connected to the heat source unit through refrigerant piping and electric wiring; and a tank unit which is connected to the water heat exchange unit through water piping, and contains a tank to store hot water obtained by heat exchanging in the water heat exchanger, wherein the water heat exchange unit and tank unit are placed in a room.

The invention is in the system of Claim 1.

### Brief Description of Drawings

FIG. 1 is a block diagram of a heat pump type hot water supplying system according to a first embodiment of the present invention;
FIG. 2 is a system diagram of a refrigerating cycle of the heat pump type hot water supplying system according to the embodiment;
FIG. 3 is a block diagram of an electric control system of the heat pump type hot water supplying system according to the embodiment; and
FIG. 4 is a block diagram of a heat pump type hot water supplying system according to a second embodiment of the present invention.

Embodiments of a heat pump type hot water supplying system according to the prevent invention will be explained hereinafter with reference to the accompanying drawings.

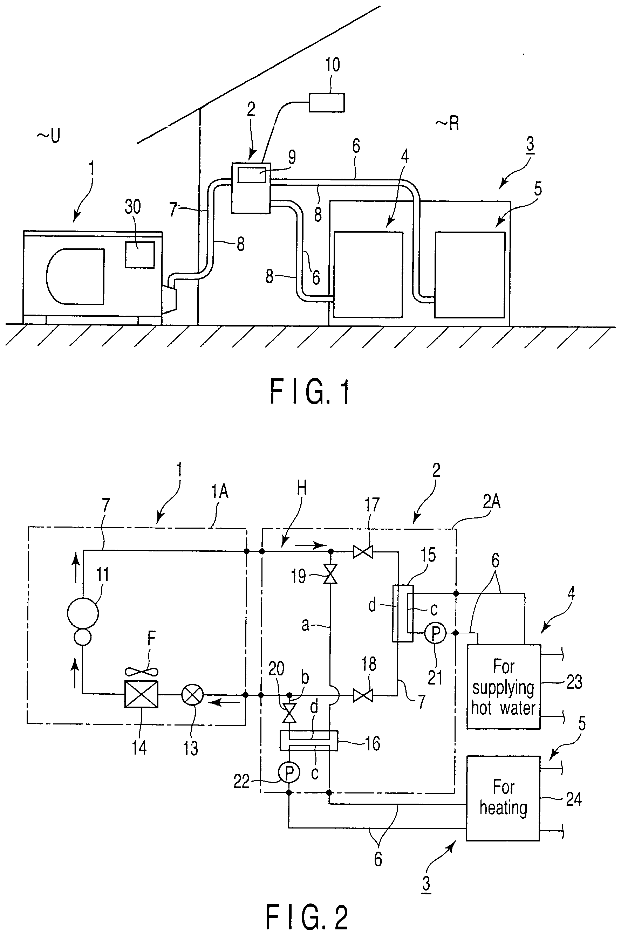

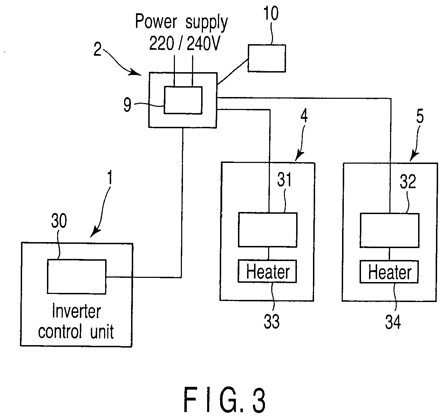

FIG. 1 is a block diagram of a heat pump type hot water supplying system according to a first embodiment of the present invention. FIG. 2 is a system diagram of a refrigerating cycle of the heat pump type hot water supplying system according to the embodiment. FIG. 3 is a block diagram of an electric control system of the heat pump type hot water supplying system according to the embodiment.

The heat pump type hot water supplying system shown in FIG. 1 comprises a heat source unit 1 installed outside U, a wall-hung water heat exchange unit 2 mounted on a wall in a room R, and a tank unit 3 placed in a utility space in the room R.

The tank unit 3 has a hot water supplying tank unit 4, and a heating tank unit 5. The hot water supplying tank unit 4 is connected to the water heat exchange unit 2 through water piping 6 and electric wiring 8. The heating tank unit 5 is connected to the water heat exchange unit 2 through the water piping 6 and electric wiring 8. An auxiliary heater is provided in the hot water supplying tank unit 4 and heating tank unit 5.

The heat source unit 1 and water heat exchange unit 2 are connected through refrigerant piping 7 and electric wiring 8. A control unit 9 provided in the water heat exchange unit 2 is electrically connected to a hot water supplying/heating remote controller (controller) 10 mounted on the wall. The heat source unit 1 is also provided with a control unit 30. The hot water supplying/heating remote controller 10 controls the control unit 30 of the heat source unit 1 and electric apparatus described later housed in the tank unit 3. The configuration of a heat pump refrigerating cycle circuit H is as follows. As shown in FIG. 2, the heat pump refrigerating cycle circuit H is configured over the heat source unit 1 and water heat exchanger unit 2.

Namely, a compressor 11, a first water heat exchanger 15, a second water heat exchanger 16, an electronic expansion valve (a pressure reduction mechanism) 13 and a heat exchanger 14 in the heat source are connected through the refrigerant piping 7.

The compressor 11, electronic expansion valve 13 and heat exchanger 14 in the heat source are housed in a housing 1A of the heat source unit 1. The first water heat exchanger 15 and second water heat exchanger 16 are housed in a housing 2A of the water heat exchange unit 2. An outdoor fan F is placed opposite to the heat exchanger 14 in the heat source, and ventilates the heat exchanger 14 in the heat source.

The first water heat exchanger 15 is provided in the refrigerant piping 7 that connects the discharge side of the compressor 11 to the electronic expansion valve 13 in the water heat exchange unit 2. A first open/close valve 17 is connected between the discharge side of the compressor 11 and first water heat exchanger 15. A second open/close valve 18 is connected between the first water heat exchanger 15 and electronic expansion valve 13.

In the water heat exchange unit 2, a branch pipe a is connected at the middle portion of the refrigerant piping 7 that connects the discharge side of the compressor 11 to the first open/close valve 17. The branch pipe a is connected to one connector of the second water heat exchanger 16 through a third open/close valve 19. A branch pipe b is connected at the middle portion of the refrigerant piping 7 that connects the second open/close valve 18 to the electronic expansion valve 13. The branch pipe b is connected to another connector of the second water heat exchanger 16 through a fourth open-close valve 20. Therefore, the first water heat exchanger 15 and second water heat exchanger 16 are connected parallel to the refrigerating cycle circuit H.

The first and second water heat exchangers 15 and 16 have a water heat exchange part c connected to the water piping 6. Effective heat exchanging is made between the heat exchange part c and refrigerant heat exchange part d connected to the refrigerating cycle circuit H. In the water heat exchange unit 2, a pump 21 is connected to the water piping 6 that is connected to the first water heat exchanger 15. A pump 22 is connected to the water piping 6 that is connected to the second water heat exchanger 16.

Hereinafter, the first water heat exchanger 15 is called a hot water supplying water heat exchanger 15, and the second water heat exchanger 16 is called a heating water heat exchanger 16. Therefore, the pump 21 connected to the hot water supplying water heat exchanger 15 through the water piping 6 is a hot water supplying pump 21. The pump 22 connected to the heating water heat exchanger 16 through the water piping 6 is a heating pump 22.

The hot water supplying pump 21 and hot water supplying water heat exchanger 15 are connected to a tank 23 that forms a hot water supplying tank unit 4, through the water piping 6. The heating pump 22 and heating water heat exchanger 16 are connected to a tank 24 that forms a heating tank unit 5, through the water piping 6. The tank unit 3 is composed of the hot water supplying tank unit 4 and heating tank unit 5, as described before.

The configuration of an electric control system is as follows. As shown in FIG. 3, utility power is supplied to the control unit 9 of the water heat exchange unit 2 connected electrically to the hot water supplying/heating remote controller 10. The control unit 9 of the water heat exchange unit 2 is an inverter controller to control electric apparatus through the control unit 30 provided in the heat source unit 1.

The control unit 9 of the water heat exchange unit 2 is electrically connected to a controller 31 provided in the hot water supplying tank unit 4 and a controller 32 provided in the heating tank unit 5, thereby controlling the heating amount of auxiliary heaters 33 and 34 provided in the unit 4 and 5 respectively, through the controllers 31 and 32.

The heat pump type hot water supplying system of this configuration operates as follows. When start of operation is instructed to the remote controller 10, the compressor 11 of the heat source unit 1 is driven. The refrigerant gas is made high in temperature and pressure, and circulates in the heat type refrigerating cycle circuit H. The refrigerant gas is led to the hot water supplying water heat exchanger 15 and heating water heat exchanger 16, and condensed to radiate condensation heat. At the same time, the hot water supplying pump 21 and heating pump 22 are driven. Thus, the circulation water is led to the water heat exchanger 15 from the tank 23 of the hot water supplying tank unit 4, and the circulation water is led to the water heat exchanger 16 from the tank 24 of the heating tank unit 5.

The circulation water absorbs the condensation heat of the refrigerant in the water heat exchangers 15 and 16, and becomes hot water. The hot water is led to the tank 23 of the hot water supplying tank unit 4 and the tank 24 of the heating tank unit 5, and stored once there. When a hot water supplying plug is opened, the hot water stored in the hot water supplying tank unit 4 is supplied and water of the same amount as the supplied hot water is supplied to the tank 23. When a heating start button of the remote controller 10 is pressed, hot water is supplied to a floor-heating panel from the tank 24 of the heating tank unit 5. This hot water radiates heat in the floor-heating panel, and heats the floor. The hot water cooled by this radiation is returned to the tank 24 of the heating tank unit 5 and heated there to a specified temperature.

In the present invention, as in an ordinary separate type air conditioner, the water heat exchange unit 2 in the room R is mounted on the wall in the room R, and connected to the heat source unit 1 installed outside U through two refrigerant piping 7 and electric wiring 8. Namely, this heat pump type hot water supplying system has almost the same configuration as an ordinary separate type air conditioner. Therefore, this heat pump type hot water supplying system can be substituted for an ordinary separate type air conditioner, and the installing condition is enlarged. The water heat exchange unit 2 is a wall-hung type in this system, but it is not limited to this. It can be a floor type, for example.

The heat source unit 1 is installed outside U, and the water heat exchanger unit 2 and tank unit 3 are installed in the room R. The water heat exchange unit 2 and tank unit 3 are connected through the water piping 6 and electric wiring 8. Therefore, since all parts of the water piping 6 are disposed in the room R, no part of the water piping 6 is influenced by the outside-air temperature. As a result, the possibility of freezing the water in the water piping 6 is eliminated, and the usability is increased.

In the refrigerating cycle circuit H, the hot water supplying water heat exchanger 15 and heating water heat exchanger 16 are connected in parallel, and the first to fourth open-close valves 17 - 20 is connected therebetween. Therefore, it is possible either to flow the refrigerant simultaneously in the water heat exchangers 15 and 16, or to flow the refrigerant in only one of the water heat exchangers 15 and 16. This permits heat exchanging to meet the hot water supplying condition and heating condition, and increase the efficiency of operation.

If the refrigerant is flowed simultaneously in the hot water supplying water heat exchange 15 and heating water heat exchanger 16, a flow rate adjusting valve is provided instead of the open-close valves 17 - 20. The distribution of the supplied amount of the refrigerant can be adjusted according to the required amount of load of the water heat exchangers 15 and 16. This increases the efficiency of operation furthermore.

As the connection of the refrigerant piping is the same as in an ordinary separate type air conditioner, even if the piping length is over 30 meters and the piping height is over 20 meters, the connection is possible and the installing condition can be eased. The water heat exchangers 15 and 16 and tanks 23 and 24 can be placed nearby, and the length of the water piping 6 can be reduced and the heat energy loss can be suppressed.

The hot water supplying tank unit 4 and heating tank unit 5 are separately configured and hot water obtained by heat exchanging in the hot water supplying water heat exchanger 15 and heating water heat exchanger 16 is individually supplied to each tank. Thus, hot water can be supplied according to the amount of load in the hot water supplying water heat exchanger 15 and heating water heat exchanger 16, and the efficiency of operation can be increased.

The space for installing the heat source unit 1 is unnecessary in a room, and the refrigerant piping 7 that connects the heat source unit 1 and water heat exchange unit 2 is not exposed in the room R. Thus, leakage of the refrigerant into the room R due to leakage of gas can be completely prevented, and a high level of safety can be obtained.

Power is supplied through the water heat exchange unit 2, but the heat source unit 1 may be shared by an outdoor unit of an air conditioner. The auxiliary heaters 33 and 34 provided in the hot water supplying tank unit 4 and heating tank unit 5 are assumed by the tank units 4 and 5, and an ON/OFF signal is emitted from the controllers 31 and 32. The discharged hot water temperature is 90°C maximum or 80°C, and the performance at heating + storing hot water and the control can be improved.

The control unit 9 of the water heat exchange unit 2 controls the first to fourth open/close valves 17 - 20, hot water supplying (DC) pump 21, heating (AC) pump 22, auxiliary heater 33 provided in the hot water supplying tank unit 4, and auxiliary heater 34 provided in the heating tank unit 5. The controller controls heating, supplying hot water, and switching of heating and supplying hot water. Namely, the control of operation and control of the heaters 33 and 34 are performed according to the temperatures and setting temperature of the tanks 23 and 24.

The inverter control unit 30 provided in the heat source unit 1 controls the compressor 11, outdoor fan F, electronic expansion valve 13, 4-way change-over valve 12, and a not-shown bottom plate heater. The controller controls the operation of the compressor 11, refrigerant temperature, defrosting, current protection, winding protection, fan motor of the outdoor fan F, and bottom plate freezing.

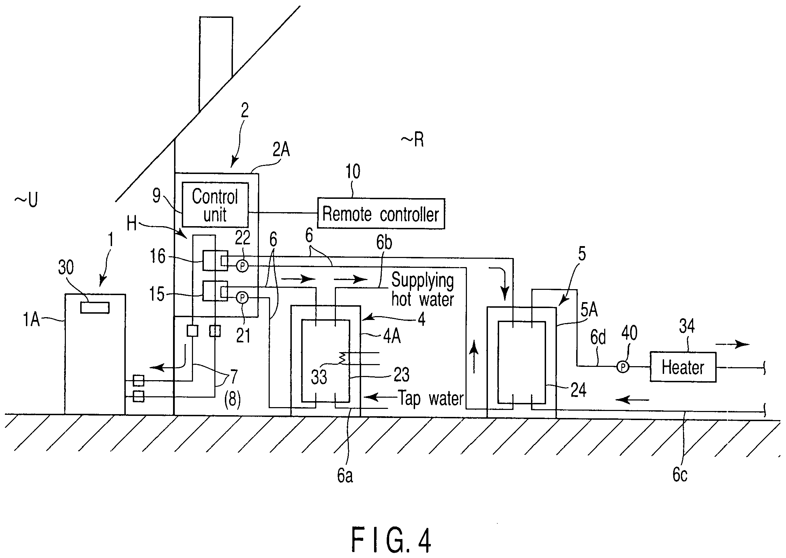

FIG. 4 is a block diagram of a heat pump type hot water supplying system according to a second embodiment of the present invention.

A heat source unit 1 is installed outside U. The heat source unit 1 has in a housing 1A a compressor 11, electronic expansion valve (pressure reducing mechanism) 13 and heat exchanger 14 in the heat source, which form a part of the refrigerating cycle circuit H explained in FIG. 2. The heat source unit 1 contains a control unit 30 to control operation of the outdoor fan F and electric apparatus.

In the room R, a water heat exchange unit 2 is placed separately from the heat source unit 1. The heat source unit 1 and water heat exchange unit 2 are connected through the refrigerant piping 7 and electric wiring 8. In the housing 2A of the water heat exchange unit 2, the hot water supplying water heat exchanger 15 and heating water heat exchanger 16 forming the remaining part of the refrigerating cycle circuit H are housed. The housing 2A of the water heat exchange unit 2 further has a control unit 9, and the hot water supplying pump 21 and heating pump 22 for leading the circulation water to the hot water supplying water heat exchanger 15 and heating water heat exchanger 16 through the water piping 6. The control unit 9 is electrically connected to the remote controller (remote control panel) 10.

The components of the refrigerating cycle circuit H in the heat source unit 1 are connected to the hot water supplying water heat exchanger 15 and heating water heat exchanger 16 in the water heat exchange unit 2 through the refrigerant piping 7. The hot water supplying water heat exchanger 15, hot water supplying pump 21 and hot water supplying tank unit 4 are connected through the water piping 6.

Namely, the water piping 6 is connected to the tank 23 provided in the housing 4A of the hot water supplying tank unit 4. The bottom of the tank 23 is connected with a water supply pipe 6a that is connected to a not-shown water supply source. The top of the tank 23 is connected with a hot water supply pipe 6b that is connected to not-shown water supply plugs of kitchen, bathroom and toilet. The tank 23 is further provided with a heater 33 (3 kW, for example) as an auxiliary heating source.

The heating water heat exchanger 16, heating pump 22 and heating tank unit 5 are connected through the water piping 6. Namely, the water piping 6 is connected to the tank 24 provided in the housing 5A of the heating tank unit 5. The bottom of the tank 24 is connected with a return pipe 6c that is connected to the hot water leading part of a not-shown floor heating panel. The top of the tank 24 is connected with a hot water supplying pipe 6d that is connected to the hot water leading part of the not-shown floor heating panel. At the middle portion of the hot water supplying pipe 6d, an auxiliary pump 40 and a heater 34 (3 kW X 3, for example) as an auxiliary heating source are provided.

Explanation on the same functions and effects as the first embodiment will be omitted.

Therefore, the amount of heat exchanging can be adjusted by operating the hot water supplying pump 21 and heating pump 22 provided in the water piping 6. Therefore, even if one of the pumps 21 or 22 is stopped, all amount of the load of heating can be obtained with the other pump 21 or 22.

The hot water supplying water heat exchanger 15 and heating water heat exchanger 16 may be connected to the refrigerating cycle circuit H in parallel or in series.

## Claims

1. A heat pump type hot water supplying system comprising:
a heat source unit (1) for outdoor arrangement which contains a compressor (11), an expansion valve (13), a heat source side heat exchanger (14) forming a part of a heat pump refrigerating cycle (H), and contains an outdoor fan (F) and a first controller (30) configured to control the outdoor fan (F) and electric apparatus;
a water heat exchange unit (2) for indoor arrangement which is configured to be placed separately from the heat source unit (1), contains a hot water supplying water heat exchanger (15), a heating water heat exchanger (16) and first, second, third and fourth valves (17, 18, 19 and 20) forming the remaining part of the heat pump refrigerating cycle (H), contains a hot water supplying pump (21) configured to lead circulation water to the hot water supplying water heat exchanger (15) through water piping (6), a heating pump (22) configured to lead circulation water to the heating water heat exchanger (16) through water piping (6), and a second controller (9) configured to control the pumps (21 and 22) and the valves (17, 18, 19 and 20), the water heat exchange unit (2) being connected to the heat source unit (1) through refrigerant piping (7) and electric wiring (8);
a hot water supplying tank unit (4) for indoor arrangement which is connected to the hot water supplying water heat exchanger (15) and the hot water supplying pump (21) through water piping (6), and contains a first tank (23) storing hot water obtained by heat exchanging in the hot water supplying water heat exchanger (15); and
a heating tank unit (5) for indoor arrangement which is connected to the heating water heat exchanger (16) and the heating pump (22) through water piping (6), and contains a second tank (24) storing hot water obtained by heat exchanging in the heating water heat exchanger (16),
**Characterized in that** the system is
configured to return a refrigerant discharged from the compressor (11) in the heat pump refrigerating cycle (H) to the compressor (11) through the first valve (17), the hot water supplying water heat exchanger (15), the second valve (18), the expansion valve (13) and the heat source side heat exchanger (14) and to return it to the compressor (11) through the third valve (19), the heating water heat exchanger (16), the fourth valve (20), the expansion valve (13) and the heat source side heat exchanger (14), thereby the hot water supply heat exchanger (15) and the heating water heat exchanger (16) are connected in parallel in the heat pump refrigeration cycle (H).

2. The heat pump type hot water supplying system according to claim 1, wherein the water heat exchange unit (2) is of a wall-hung type configured to be mounted on a wall of a room.

## Patentansprüche

1. Heißwasserzufuhrsystem nach Wärmepumpenart umfassend:
eine Wärmequelleneinheit (1) zum Anordnen im Freien, welche einen Kompressor (11), ein Entspannungsventil (13), einen Wärmetauscher (14) auf der Wärmequellenseite, welcher Teil eines Wärmepumpenkühlkreislaufs (H) ist und welcher einen Außenlüfter (F) und einen ersten Controller (30) enthält, welcher konfiguriert ist, um den Außenlüfter (F) und das elektrische Gerät zu steuern;
eine Wasserwärmetauscheinheit (2) zum Anordnen im Innenraum, welche konfiguriert ist, um getrennt von der Wärmequelleneinheit (1) angeordnet zu sein, einen Heißwasserzufuhr-Wasserwärmetauscher (15), einen Heizwasserwärmetauscher (16) und ein erstes, zweits, drittes und viertes Ventil (17, 18, 19 und 20), welche den restlichen Teil des Wärmepumpenkühlkreislaufs (H) bilden, enthält, eine Heißwasserzufuhrpumpe (21), welche konfiguriert ist, um Umlaufwasser zu dem Heißwasserzufuhr-Wasserwärmetauscher (15) durch Wasserleitungen (6) zu leiten, eine Heizpumpe (22), welche konfiguriert ist, um Umlaufwasser zu dem Heizwasserwärmetauscher (16) durch Wasserleitungen (6) zu leiten, und einen zweiten Controller (9), welcher konfiguriert ist, um die Pumpen (21 und 22) und die Ventile (17, 18, 19 und 20) zu steuern, enthält, wobei die Wasserwärmetauscheinheit (2) mit der Wärmequelleneinheit (1) über Kühlmittelleitungen (7) und elektrische Kabel (8) verbunden ist;
eine Heißwasserzufuhrtankeinheit (4) zum Anordnen im Innenraum, welche mit dem Heißwasserzufuhr-Wasserwärmetauscher (15) und mit der Heißwasserzufuhrpumpe (21) über Wasserleitungen (6) verbunden ist und welche einen ersten Tank (23) umfasst, welcher Heißwasser enthält, welches durch Wärmetausch im Heißwasserzufuhr-Wasserwärmetauscher (15) erhalten wird; und
eine Heiztankeinheit (5) zum Anordnen im Innenraum, welche mit dem Heizwasserwärmetauscher (16) und mit der Heizpumpe (22) über Wasserleitungen (6) verbunden ist und welche einen zweiten Tank (24) enthält, welcher Heißwasser enthält, welches durch Wärmetausch im Heizwasserwärmetauscher (16) erhalten wird,
**dadurch gekennzeichnet, dass** das System
konfiguriert ist, um ein Kühlmittel, welches vom Kompressor (11) im Wärmepumpenkühlkreislauf (H) ausgegeben wird, durch das erste Ventil (17), den Heißwasserzufuhr-Wasserwärmetauscher (15), das zweite Ventil (18), das Entspannungsventil (13) und den Wärmetauscher (14) auf der Wärmequellenseite zum Kompressor (11) zurückzuführen, und um es durch das dritte Ventil (19), den Heizwasserwärmetauscher (16), das vierte Ventil (20), das Entspannungsventil (13) und den Wärmetauscher (14) auf der Wärmequellenseite zum Kompressor (11) zurückzuführen, wodurch der Heißwasserzufuhr-Wärmetauscher (15) und der Heizwasserwärmetauscher (16) parallel zueinander im Wärmepumpenkühlkreislauf (H) geschaltet sind.

2. Heißwasserzufuhrsystem nach Wärmepumpenart nach Anspruch 1, wobei die Wasserwärmetauscheinheit (2) eine Wandeinheit ist, welche zum Anbringen an einer Raumwand konfiguriert ist.

## Revendications

1. Système d'alimentation en eau chaude de type pompe à chaleur comprenant :
une unité de source de chaleur (1) pour un agencement extérieur, qui contient un compresseur (11), une soupape de dilatation (13), un échangeur de chaleur du côté de la source de chaleur (14) faisant partie d'un cycle de réfrigération de pompe à chaleur (H), et contient un ventilateur extérieur (F) et un premier organe de commande (30) configuré pour commander le ventilateur extérieur (F) et l'appareil électrique ;
une unité d'échange thermique d'eau (2) pour un agencement intérieur, qui est configurée pour être placée séparément de l'unité de source de chaleur (1), contient un échangeur de chaleur d'eau d'alimentation en eau chaude (15), un échangeur de chaleur d'eau de chauffage (16) et des première, deuxième, troisième et quatrième valves (17, 18, 19 et 20) formant la partie restante du cycle de réfrigération de pompe à chaleur (H), contient une pompe d'alimentation en eau chaude (21) configurée pour amener l'eau de circulation à l'échangeur de chaleur d'eau d'alimentation en eau chaude (15) par des tuyaux d'eau (6), une pompe de chauffage (22) configurée pour amener l'eau de circulation à l'échangeur de chaleur d'eau de chauffage (16) par les tuyaux d'eau (6) et un second organe de commande (9) configuré pour commander les pompes (21 et 22) et les valves (17, 18, 19 et 20), l'unité d'échange de chaleur d'eau (2) étant raccordée à l'unité de source de chaleur (1) par les tuyaux de réfrigérant (7) et le câblage électrique (8) ;
une unité de réservoir d'alimentation en eau chaude (4) pour un agencement intérieur, qui est raccordée à l'échangeur de chaleur d'eau d'alimentation en eau chaude (15) et la pompe d'alimentation en eau chaude (21) par des tuyaux d'eau (6), et contient un premier réservoir (23) stockant l'eau chaude obtenue par échange de chaleur dans l'échangeur de chaleur d'eau d'alimentation en eau chaude (15) ; et
une unité de réservoir de chauffage (5) pour un agencement intérieur, qui est raccordée à l'échangeur de chaleur d'eau de chauffage (16) et la pompe de chauffage (22) par des tuyaux d'eau (6), et contient un second réservoir (24) stockant l'eau chauffage obtenue par échange de chaleur dans l'échangeur de chaleur d'eau de chauffage (16),
**caractérisé en ce que** le système est configuré pour ramener un réfrigérant déchargé par le compresseur (11) dans le cycle de réfrigération de pompe à chaleur (H) au compresseur (11) par la première valve (17), l'échangeur de chaleur d'eau d'alimentation en eau chaude (15), la deuxième valve (18), la soupape de dilatation (13) et l'échangeur de chaleur du côté de la source de chaleur (14) et le ramener au compresseur (11) par la troisième valve (19), l'échangeur de chaleur d'eau de chauffage (16), la quatrième valve (20), la soupape de dilatation (13) et l'échangeur de chaleur du côté de la source de chaleur (14), ainsi l'échangeur de chaleur d'alimentation en eau chaude (15) et l'échangeur de chaleur d'eau de chauffage (16) sont raccordés en parallèle dans le cycle de réfrigération de pompe à chaleur (H).

2. Système d'alimentation d'eau chaude de type pompe à chaleur selon la revendication 1, dans lequel l'unité d'échange de chaleur d'eau (2) est du type mural, configurée pour être montée sur un mur d'une pièce.
